# EUROPEAN PATENT APPLICATION

(11) **EP 4 722 959 A1**
(43) Date of publication of application: **08.04.2026**
(21) Application number: 24204250.5
(22) Date of filing: 02.10.2024
(51) Int. Cl.: G06F 21/50, G06F 21/57, G06F 21/74, G06F 21/62

(54) **SYSTEM AND METHOD PROVIDING SPECIFIC INSIGHTS INTO DATA-CONFIDENTIALITY-PRESERVING APPLICATIONS IN CASE OF DEVIATIONS**

(71) Applicant: ABB SCHWEIZ AG, 5400 Baden (CH)
(72) Inventor: GAMER, Thomas, 68782 Brühl (DE); KOHNHAEUSER, Florian, 64560 Riedstadt (DE); GRUENER, Sten, 69514 Laudenbach (DE); GOETTEL, Christian, 5442 Fislisbach (CH)
(74) Representative: Maiwald GmbH

(57) **Abstract**

There is disclosed a method for providing insights into confidential company data in case of data deviations in an industrial plant context. The method comprises processing company data by a calculation module in a first processing state and obtaining key performance indicator, KPI, values from the processing. The company data are secured by first IT security means and are associated with a process related to a first company. The calculation module is secured by second IT security means and is associated with a second company. The method further comprises determining data deviations by determining whether a predetermined KPI threshold is violated by the obtained KPI values; and, based on a result of the determining, using an a posteriori method and/or using an a priori method.

## Description

### FIELD OF THE INVENTION

The invention relates to providing specific insights into data-confidentiality-preserving applications in case of deviations, in an industrial plant context.

### BACKGROUND

In a setup with multiple parties, intellectual property (IP) -protected applications might comprise algorithms or models that are business-critical for the providing party, and data to be processed that is business-critical for another providing party, i.e., it shall not be exposed as original data to the party running an application.

In case IT security means are used by a provider of an application in order to protect sensitive applications, still the application itself might run into unexpected states or show abnormal or unexpected conditions or results. Frequency of such occasions can vary from very rare up to regular intervals, depending on the actual trigger for these abnormal or unexpected conditions.

In such case, the user of an application might want to identify and mitigate or solve the underlying issue causing the abnormal or unexpected conditions. However, the user of an application may not be able to do such analysis, as the execution of the application, and therefore all detailed information, may be protected by IT security means. On the other hand, the provider of an application might want to support the user in such cases but cannot easily provide access to specific information, as the user may want to keep his data confidential or protected by IT security means.

In general, protecting code and data from other parties may be of highest relevance for all applications that keep original data confidential and protected to the owner of the data, while providing aggregated or selected data items to higher-level users. This, for instance, applies to Digital Twin / Industry 4.0 domain, with partial models being confidential and only accessible to the owner while providing access to aggregated or selected data to other partial models or lifecycle roles.

As a specific example for IT security means confidential computing technology is known. Confidential computing is one potential technology to be applied to achieve confidentiality of applications and/or data by running sensitive applications or processing sensitive data protected by IT security means, for example within a trusted execution environment (TEE) with isolated execution environments and encrypted memory. This requires dedicated hardware, for example ARM TrustZone for embedded, mobile and server devices or Intel SGX for server devices, and can be combined with further technologies such as remote attestation. Confidential computing is primarily being used by cloud providers such as Amazon, Google, IBM, and Microsoft, as well as for Digital Rights Management (DRM) solutions of streaming services such as Netflix, where code and data typically originate from the same source. However, in a case where code and data do not originate from a same source, protection of such code or data from other parties may be of highest importance. This may especially be the case in an industrial plant context as already indicated above.

Hence, there is room and need for improvement regarding the providing of insights into confidential data, for example company data, in case of data deviations in an industrial plant context.

### SUMMARY

In view of the above, it is an object of the present disclosure to overcome at least part of the drawbacks available regarding the providing of insights into confidential data, for example company data, in case of data deviations in an industrial plant context.

Therefore, to address one or more of these drawbacks, there is provided, in a first aspect, a method for providing insights into confidential company data in case of data deviations in an industrial plant context. The method comprises processing company data by a calculation module in a first processing state and obtaining key performance indicator (KPI) values from the processing. The company data are secured by first IT security means and are associated with a process related to a first company. The calculation module is secured by second IT security means and is associated with a second company. The method further comprises determining data deviations by determining whether a predetermined KPI threshold is violated by the obtained KPI values. The method further comprises, based on a result of the determining, using an a posteriori method and/or using an a priori method. Using the a posteriori method comprises providing action recommendations for data deviation reduction based on a confidential machine learning model and/or switching the calculation module into a second processing state, wherein the second processing state enables the calculation module to perform additional processing related to the company data and to provide additional information related to the company data as compared with the first processing state. Using the a priori method comprises applying a zero-knowledge proof method and/or a remote attestation method related to the company data.

It shall be noted that examples for IT security means may comprise encryption, digital signatures, message authentication codes, anonymization and obfuscation. Examples are outlined below in more detail. Hence, the phrase that "the company data are secured by first IT security means" may be understood in that the company data are secured by at least one of encryption, digital signatures, message authentication codes, anonymization and obfuscation. I.e., for example, the company data are encrypted, a (certain) digital signature may be required to access the company data, a message authentication code may be required to access the company data, the company data are anonymized, or the company data are obfuscated. Accordingly, the phrase that "the calculation module is secured by second IT security means" may be understood in that the calculation module is secured by at least one of encryption, digital signatures, message authentication codes, anonymization and obfuscation. I.e., for example, the calculation module (for example the calculation module data comprising for example code data or mathematical formulas of the calculation module) is encrypted, a (certain) digital signature may be required to access the calculation module, a message authentication code may be required to access the calculation module, the calculation module may be anonymized, or the calculation module may be obfuscated.

Obtaining the KPI values from the processing may be a continuous monitoring of the KPI values obtained from the processing. Further, for increasing understandability and as outlined below in more detail, the obtaining the KPI values from the processing of the company data may be understood in that for one or more predetermined KPIs corresponding KPI values are determined, calculated, derived or acquired from the company data. For example, a KPI may be a "total energy consumption", and the company data may comprise energy consumption data that are indicative of energy consumption at several process steps during a production process at a process plant. Hence, from the company data, a total energy consumption for the production process at the process plant may be obtained. Such obtained total energy consumption may be a KPI value that corresponds to the KPI "total energy consumption". Therefore, said in other words, the KPI values are obtained from the processing, wherein the KPI values are associated with one or more predetermined KPIs and wherein the KPI values are obtained from the company data, for example the KPI values are calculated from the company data by the calculation module.

It shall be noted that by company data it may be meant confidential data provided by a certain company and/or associated with a certain company. For example, company data may comprise production related data like CO2 emission data, resource consumption data or production cost data for example, for processing steps of a production process at a process plant. Company related data may comprise technical details of automation equipment, for example battery characteristics of a certain device, for example of a vehicle that is part of a fleet of vehicles.

The first processing state and the second processing state may be different operational states or operational modes for the calculation module. Based on a state or mode of the calculation module, the calculation module may have access to certain data and/or certain calculation methods. For example, the first processing state may allow to access a first part of confidential data, wherein the second processing state may allow to access the first part of the confidential data and a second part of the confidential data. Hence, it may be said that a respective state or mode is associated with one or more corresponding parts of confidential data. For example, in the first processing state, the calculation module may have access to process company data on a highest level of aggregated data, i.e. the company data may be aggregated to a largest extent. Wherein in the second processing state, the calculation module may have access to process the company data on a lower or lowest level of aggregated data, i.e. the company data may be less aggregated or not aggregated. Less aggregated data may comprise that more detailed information may be obtainable from the company data and thus more detailed information about the second company may be obtainable. Moreover, regarding the certain calculation methods, the calculation module in the second state may be enabled to perform calculations that the calculation module was not enabled or allowed to perform in the first state. For example, the calculation module may be enabled to calculate CO2 emission data for individual processing steps of a production process at a process plant. Wherein in the first state, the calculation module may only be enabled to calculate a total of CO2 emission for the entire production process at a process plant.

The process related to the first company may be a production process at a process plant for example. The process related to the first company may be an operation process of automation equipment associated with a production process at a process plant for example. For example, the process related to the first company may be an operation process of a fleet of vehicles that are used to transport resources to a production side and/or from the production side.

The first company may provide the company data (that are associated with the first company) and may be a data provider or a data providing party. The second company may provide the calculation module or an application that comprises the calculation module and may thus be a calculation module/application provider or a calculation module/application providing party.

It shall be noted that by the determining the data deviations, it may be meant that, said in other words, it is determined whether one or more predetermined KPI thresholds or threshold values, that are related to the one or more predetermined KPIs as mentioned above, are violated (exceeds or falls below a limit value for example) by one or more of the KPI values that are obtained from the processing of the company data.

It shall further be noted that the expression that the method further comprises, based on a result of the determining, using an a posteriori method that comprises switching the calculation module into a second processing state, may also be understood as the method further comprises, based on a result of the determining, switching the calculation module into a second processing state. Hence, the expression "using an a posteriori method" may be avoided, but is used herein to differentiate between methods to be applied a posteriori to a determined deviation. Similar, it shall be noted that the expression that the method further comprises, based on a result of the determining, using an a priori method that comprises applying a zero-knowledge proof method and/or a remote attestation method related to the company data, may also be understood as the method further comprises, based on a result of the determining, applying a zero-knowledge proof method and/or a remote attestation method related to the company data. Hence, the expression "using an a priori method" may be avoided, but is used herein to differentiate between methods to be applied a priori to a determined deviation. A priori methods may be zero-knowledge proof (ZKP) or remote attestation methods, that may allow to verify that a model of sub-suppliers or partners used is valid without the sub-supplier or partner having to reveal the model itself. For example, with zero-knowledge proofs, any sensors of a platform (at which the calculation module may be provided) using invalid models or that need to be recalibrated or calibrated may get flagged. Similarly, remote attestation could be used to ensure the integrity of a calculation engine, for example by verifying the origin and authenticity of all algorithms, the execution engine, and the platform underneath. It shall be noted that regarding the model of sub-suppliers or partners, the term "model" may be understood as a synonym for algorithm, calculation engine, or code in general. According to several examples of the present disclosure, throughout the present application, the term "model" may be understood as a synonym for algorithm, calculation engine, or code in general. Further, such sub-suppliers and partners may be understood in general as external parties that provide the model, which can be verified by remote attestation or ZKP without revealing the model itself.

The action recommendations may comprise recommendations that are directed to actions that are to be performed at one or more processing steps of a production process for example. For example, a maximum boiler temperature may be recommended to be reduced by a certain temperature amount in order to reduce CO2 emissions.

The method according to the first aspect is advantageous in that it may participate in enabling to providing an increased traceability of information flow and algorithmic decisions, at least for a-posteriori inspection, as well as verifiable results in case of a-priori verification. It may also allow to prevent a leakage of IP knowledge or confidential data while processes are on track, i.e., the processes do not violate predetermined key performance indicators, but also while performing an analysis or limited analysis in case of violations or deviations. Furthermore, it is enabled to offer partial root cause analysis, for example in hindsight, and action recommendations based on confidential data with I P-protected applications, in collaboration with third-party data providers.

According to several examples of the present disclosure, the method may further comprise embedding or incorporating one or more predetermined KPI thresholds into the calculation module; and determining whether the predetermined KPI threshold is violated based on determining whether an embedded predetermined KPI threshold is violated.

It shall be noted that the embedding the one or more predetermined KPI thresholds into the calculation module may be understood as embedding one or more "traps" into the calculation module. A "trap" may be associated with predetermined KPI values, for example with KPI values above (or below) a predetermined threshold value or between predetermined threshold values. Thus, for example, in case an obtained KPI value is determined to violate a predetermined threshold value or to be within a predetermined range between predetermined threshold values, it may be understood that the "trap" hits. Said in other words, a "trap" may be defined by predetermined "trap conditions", which may be understood as comprising "trap boundaries" that represent one or more predetermined threshold values. Thus, in case an obtained KPI value satisfies such "trap conditions" and violates a "trap boundary" or is within a range between "trap boundaries", it may be determined that an embedded predetermined KPI threshold is violated.

It shall further be noted that the calculation module itself may be designed to provide additional insights into the company data in case a "trap" hits. Thus, the determining whether an embedded predetermined KPI threshold is violated may be understood as determining, by the calculation module, whether an embedded predetermined KPI threshold is violated. Further, the using an a posteriori method and/or the using an a priori method may be understood as using, by the calculation module, an a posteriori method and/or using, by the calculation module, an a priori method. Said in other words, the calculation module may be configured to perform a certain processing or action based on a predetermined threshold being violated.

Moreover, it shall be noted that in case it may be determined that a predetermined KPI threshold is violated, the calculation module may be triggered to perform one or more predetermined processing steps, based on the predetermined KPI threshold that has been violated for example. Such triggering, i.e. to perform a processing step due to a predetermined KPI threshold being violated, may be understood as a "trap that hits".

For example, in case a KPI has a certain value which violates a predetermined KPI threshold, such KPI value covers or hits a "trap" and further processing steps may be triggered. There may be several "traps" or "triggers" associated with several predetermined KPIs. The process may be a production process, for which raw materials may be required, that are delivered by the first company. A total emission of CO2 for the production process, within a predetermined time period for example, may be an example for a KPI. Additionally or alternatively, a total energy consumption, a total throughput time or a total rest period may be other examples for further KPIs of a production process. A "trap" being hit or a trigger/trigger criterion being satisfied may comprise one of a predetermined KPI threshold being violated. For example, further, the "trap" being hit or the trigger/trigger criterion being satisfied may trigger the calculation module to switch from the first state into the second state. In doing so, as already indicated above, additional data may become processable for the calculation module that were not processable before, i.e. not accessible or not usable before.

Hence, due to the embedding, it may be predetermined how to handle, i.e. how the calculation module may handle an issue situation, for example an alarm situation, when a predetermined threshold KPI value is violated, and the calculation module is further secured by the second IT security means, and no interaction from the first company or the second company may be required.

According to several examples of the present disclosure, the method may further comprise, if it is determined that the predetermined KPI threshold is violated, triggering the calculation module to perform the switching and/or the applying.

It shall be noted that the triggering may be a triggering that is associated with a certain threshold violation. Said in other words, different KPI threshold violations may be associated with corresponding triggering processes.

Hence, determined violations, i.e. determined deviations or data deviations, may be handled quickly, reliably, transparently and autonomously.

According to several examples of the present disclosure, the switching the calculation module into the second processing state may comprises making additional company data accessible for the calculation module, wherein the additional company data are associated with the process related to the first company. The switching may further comprise processing the additional company data by the calculation module.

It shall be noted that, as already indicated above, the additional company data may differ from the company data based on a data aggregation level and/or based on a content of included information.

Hence, an origin or a reason for a deviation may be determined or identified more reliably and more accurately, wherein data confidentiality may still be guaranteed.

According to several examples of the present disclosure, at least part of the additional company data may be included in the company data and the making the additional company data accessible for the calculation module may comprise transferring the at least part of the additional company data to the calculation module. Additionally or alternatively, the making the additional company data accessible may comprise enabling the calculation module to access the at least part of the additional company data included in the company data.

Hence, it may be avoided that the calculation module needs to access or receive data from another direction or address as the direction or address of the company data.

Regarding the additional company data, the following example may be considered for explanation purposes. The company data may be data to analyse a fleet of autonomous equipment of the first company, wherein the additional company data may be data to analyse the fleet on a single autonomous equipment basis, for example on a vehicle basis or a device basis. Hence, an individual vehicle or an individual device may be identified to be responsible for a "trap" being hit, i.e. for a predetermined KPI threshold being violated.

According to several examples of the present disclosure, at least part of the additional company data may not be included in the company data and may be secured by third IT security means, and the making the additional company data accessible for the calculation module may comprise transferring the at least part of the additional company data to the calculation module. Additionally or alternatively, the making the additional company data accessible may comprise enabling the calculation module to access the at least part of the additional company data secured by the third IT security means.

Hence, different IT security means comprising different levels of security protection or different solutions for security protection may be used for the company data and the additional company data, based on an importance of the respective data for the first company for example.

According to several examples of the present disclosure, the switching the calculation module into the second processing state may comprises enabling the calculation module to perform additional calculation methods. The switching may further comprise processing the company data and/or the additional company data by using one or more of the additional calculation methods.

It shall be noted that the additional calculation methods may comprise algorithms, AI/ML models or mathematical formulas for example, that the calculation module may then be enabled to use.

Hence, more insights into data deviations for example may be obtained based on processing the same company data in a different way.

According to several examples of the present disclosure, the enabling the calculation module to perform the additional calculation methods may comprise enabling the calculation module to processing the company data and/or the additional company data, and to obtaining values for additional KPIs from the processing.

It shall be noted that the additional KPIs may be KPIs for which the calculation module was not allowed or enabled to obtain KPI values for when being in the first state.

Hence, more values for single KPIs may allow to analyse data deviations in more detail.

According to several examples of the present disclosure, at least two IT security means of the first IT security means, the second IT security means and the third IT security means may be different from each other, or wherein the first IT security means, the second IT security means and the third IT security means may be same IT security means.

Hence, IT security means may be applied as suitable for a certain situation.

According to several examples of the present disclosure, to be secured by at least one of the first IT security means, the second IT security means and the third IT security means may comprise at least one of:
- providing the calculation module, the company data and/or the additional company data in a trusted execution environment, TEE,
- encrypting and/or authenticating the company data and/or the additional company data,
- protecting the company data and/or the additional company data using distributed ledger technology, like blockchain for example,
- using homomorphic encryption to perform computations on encrypted company data and/or additional company data without decrypting it,
- obfuscating the company data and/or the additional company data,
- proving the state of the company data and/or the additional company data by means of zero-knowledge proofs,
- anonymizing the company data and/or the additional company data,
- enforcing access control on the company data and/or the additional company data via attribute-based, role-based, and/or context-based authorization.

It shall be noted that the expression "authenticating company data" refers to the process of verifying the accuracy, integrity, and legitimacy of information related to a company. This can involve ensuring that the data is accurate, originates from a trustworthy source, and has not been tampered with. It is a way to confirm that the data is genuine, reliable, and representative.

Hence, IT security means may be applied as suitable for a certain situation.

According to several examples of the present disclosure, the calculation module may comprise at least one of:
- an algorithm,
- an artificial intelligence/machine learning (AI/ML) model,
- a mathematical model, and
- a physical model.

Hence, IT security means may be applied as suitable for a certain situation.

According to several examples of the present disclosure, one or more predetermined a posteriori methods may be associated with respective one or more predetermined KPI thresholds, and wherein the method may further comprise using one or more predetermined a posteriori methods based on determined corresponding one or more predetermined KPI thresholds.

According to several examples of the present disclosure, one or more predetermined a priori methods may be associated with respective one or more predetermined KPI thresholds, and wherein the method may further comprise using one or more predetermined a priori methods based on determined corresponding one or more predetermined KPI thresholds.

For example, based on the determined violated KPI threshold, i.e. based on the "trap" that is determined to be hit, a corresponding processing of one or more predetermined a posteriori methods and/or of one or more predetermined a priori methods may be triggered. Said in other words, there may be a "1 to n"-association between a violated threshold and n (with n being 1 or more) triggered processes. Also, there may be a "m to 1"-association between m (with m being 1 or more) violated thresholds and 1 triggered process. Also, there may be a "m to n"-association between m (with m being 1 or more) violated thresholds and n (with n being 1 or more) triggered processes.

Thus, said in other words, the switching and/or the applying may be based on the certain predetermined threshold that is violated, i.e. on the certain "trap" that has been hit. For example, in case a first predetermined threshold may be violated, the calculation module may switch into the second state, wherein in case a second predetermined threshold may be violated, the calculation module may switch into a third state. An accessibility to company data and/or additional company data may vary based on the state of the calculation module. Usable calculation methods may vary based on the state of the calculation module. Said in other words, based on the specific "trap" that fires, a different amount of additional data may be accessible for the calculation module and/or different calculation methods may be available for the calculation module.

Hence, the insights into data deviations may be individualized as appropriate.

According to several examples of the present disclosure, the method may further comprise providing the calculation module on a platform; and receiving the company data and/or the additional company data at the platform.

It shall be noted that the platform may, in general, be provided by the first company or the second company. However, the platform may be provided by a third company representing a platform provider.

Hence, data may be kept confidential even in a situation where three parties participate, i.e. a data provider, an application provider and a platform provider.

According to a second aspect, there is provided a data processing apparatus for providing insights into confidential company data in case of data deviations in an industrial plant context, the data processing apparatus comprising a processor being configured to carry out the method of the first aspect.

The data processing apparatus according to the second aspect is advantageous in that it may participate in enabling to providing an increased traceability of information flow and algorithmic decisions, at least for a-posteriori inspection, as well as verifiable results in case of a-priori verification. It may also allow to prevent a leakage of IP knowledge or confidential data while processes are on track, i.e., the processes do not violate predetermined key performance indicators, but also while performing an analysis or limited analysis in case of violations or deviations. Furthermore, it is enabled to offer partial root cause analysis, for example in hindsight, and action recommendations based on confidential data with IP-protected applications, in collaboration with third-party data providers.

According to a third aspect, there is provided a data processing system for providing insights into confidential company data in case of data deviations in an industrial plant context. The data processing system comprising a data processing apparatus of the second aspect. Additionally, or alternatively, the data processing system comprises means for carrying out the method of the first aspect.

The data processing system according to the third aspect is advantageous in that it may participate in enabling to providing an increased traceability of information flow and algorithmic decisions, at least for a-posteriori inspection, as well as verifiable results in case of a-priori verification. It may also allow to prevent a leakage of IP knowledge or confidential data while processes are on track, i.e., the processes do not violate predetermined key performance indicators, but also while performing an analysis or limited analysis in case of violations or deviations. Furthermore, it is enabled to offer partial root cause analysis, for example in hindsight, and action recommendations based on confidential data with I P-protected applications, in collaboration with third-party data providers.

According to a fourth aspect, there is provided an industrial plant comprising a data processing apparatus of the second aspect and/or a data processing system of the third aspect.

By "industrial plant", according to several examples, it may be meant an industrial plant, industrial production plant or industrial resource plant like a mine for example, comprising one or more pipelines, production lines and/or assembly lines for transforming one or more educts into a product and/or for assembling one or more components into a final product for example. According to several examples, it may be meant an industrial plant in which data from third parties are processed for processing the transforming and/or the assembling. According to several examples, it may be meant an industrial plant in oil industry, in gas industry, in mining industry, in chemical industry, in wind and power industry, or in food and beverage industry.

The industrial plant according to the fourth aspect is advantageous in that it may participate in enabling to providing an increased traceability of information flow and algorithmic decisions, at least for a-posteriori inspection, as well as verifiable results in case of a-priori verification. It is also prevented a leakage of IP knowledge or confidential data while processes are on track, i.e., the processes do not violate predetermined key performance indicators, but also while performing an analysis or limited analysis in case of violations or deviations. Furthermore, it is enabled to offer partial root cause analysis, for example in hindsight, and action recommendations based on confidential data with IP-protected applications, in collaboration with third-party data providers.

According to a fifth aspect, there is provided a computer-readable medium comprising instructions which, when executed by a computing system, cause the computing system to perform the method of the first aspect. The computer-readable medium may be transitory or non-transitory, volatile or non-volatile.

The computing system can typically be a processor, for example a processor that is part of a computer.

The computer-readable medium according to the fifth aspect is advantageous in that it may participate in enabling to providing an increased traceability of information flow and algorithmic decisions, at least for a-posteriori inspection, as well as verifiable results in case of a-priori verification. It may also allow to prevent a leakage of IP knowledge or confidential data while processes are on track, i.e., the processes do not violate predetermined key performance indicators, but also while performing an analysis or limited analysis in case of violations or deviations. Furthermore, it is enabled to offer partial root cause analysis, for example in hindsight, and action recommendations based on confidential data with IP-protected applications, in collaboration with third-party data providers.

According to a sixth aspect, there is provided a computer program product comprising instructions which, when executed by a computing system, enable or cause the computing system to perform the method of the first aspect. The computer program product may comprise a computer-readable medium comprising instructions of the computer program product.

The computer program product according to the sixth aspect is advantageous in that it may participate in enabling to providing an increased traceability of information flow and algorithmic decisions, at least for a-posteriori inspection, as well as verifiable results in case of a-priori verification. It may also allow to prevent a leakage of IP knowledge or confidential data while processes are on track, i.e., the processes do not violate predetermined key performance indicators, but also while performing an analysis or limited analysis in case of violations or deviations. Furthermore, it is enabled to offer partial root cause analysis, for example in hindsight, and action recommendations based on confidential data with IP-protected applications, in collaboration with third-party data providers.

According to a seventh aspect, there is provided a use of at least one of a data processing apparatus of the second aspect, a data processing system of the third aspect, an industrial plant of the fourth aspect, a computer-readable medium of the fifth aspect, and/or a computer program product of the sixth aspect.

The use according to the seventh aspect is advantageous in that it may participate in enabling to providing an increased traceability of information flow and algorithmic decisions, at least for a-posteriori inspection, as well as verifiable results in case of a-priori verification. It may also allow to prevent a leakage of IP knowledge or confidential data while processes are on track, i.e., the processes do not violate predetermined key performance indicators, but also while performing an analysis or limited analysis in case of violations or deviations. Furthermore, it is enabled to offer partial root cause analysis, for example in hindsight, and action recommendations based on confidential data with IP-protected applications, in collaboration with third-party data providers.

Optional features of the first aspect may form part of any of the second to seventh aspects, mutatis mutandis.

The method of the first aspect may be at least in parts computer implemented. Preferably the method of the first aspect is computer implemented.

The computer-readable medium of the fifth aspect may have stored thereon the computer program product of the sixth aspect.

The term "obtaining", as used herein, may comprise, for example, receiving from another system, apparatus, or process; receiving via an interaction with a user; loading or retrieving from storage or memory; measuring or capturing using sensors or other data acquisition apparatuses.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- Figure 1 schematically illustrates an architectural drawing, how a confidential algorithm can work with confidential data of multiple products of different vendors in a trusted execution environment, according to several examples of the present disclosure;
- Figure 2 illustrates a schematic drawing showing a sequence of events that may happen in case of a deviation;
- Figure 3 illustrates a flowchart indicative of a method according to several examples of the present disclosure; and
- Figure 4 shows a block diagram schematically illustrating a data processing apparatus according to several examples of the present disclosure.

### DETAILED DESCRIPTION

To allow for traceability and root cause analysis, the present disclosure provides (partial) insights into applications and data that is confidentiality-protected by, for example, trusted execution environments or other IT security measures. This allows to explain or understand a specific application behavior or application results, especially in case of deviations from expected behavior or results, as well as to take appropriate corrective actions in the industrial process, despite preserving data in encrypted state for example and without exposing original cleartext data. As original data may not be exposed, insights might be limited to some extent.

According to several examples of the present disclosure, means to achieve such traceability can be integrated into an application, like a fleet management calculation module, which may be at least one of a fleet management algorithm, a mathematical model for fleet management, a physical model for fleet management and a machine learning/artificial intelligence (ML/AI) model for fleet management, as (1) a-priori verifications, or to allow (2) a-posteriori inspections. With the former (i.e. a-priori verifications), involved partners can, for example, verify that legitimate models (e.g., AI/ML, mathematical or physical models) are used by the applications. With the latter (i.e. a-posteriori inspections), additional information and insights, for example, disaggregated values or most significant outliers, can be shared in case specific "trap conditions" are met, such as a key performance indicator (KPI) being outside of a predefined range, i.e. violates the predefined range (at a first end or second end of the range) or an asset malfunctioning. Such mechanisms may need to be pre-engineered and will not simply expose original data. With such additional information and insights, industrial processes can be steered back to normal behavior while preserving data confidentiality.

IT security means might be applied, for example, to encrypt data or to sign algorithms in order to achieve integrity of the executed applications.

It shall be noted that the present disclosure is not limited to confidential computing applications but fits all applications keeping original data confidential and protected to the owner of the data, while providing aggregated or selected data items to higher-level users. This, for instance, applies to Digital Twin / Industry 4.0 domain, with partial models being confidential and only accessible to the owner while providing access to aggregated or selected data to other partial models or lifecycle roles.

According to several examples of the present disclosure, an application area is sustainability dashboards that show the end customer aggregated values like usage of ROHS material or CO2 consumption of the entire automation systems, building on a potentially long supply chain of information down to the individual material or each and every manufacturing step from material to full automation system. Other examples might be CO2 emission tracking, which can, for instance, be based on digital twin submodels. Finally, data processing tools like streaming calculation engines, for example ABB's Edgenius streaming calculation engine as a mere example and without being limited to that, for example might also offer algorithms or applications that benefit from aggregating data while not disclosing the original data such as a fleet management application for heterogeneous mobile mining equipment to manage energy optimally but an application provider or calculation module provider not being allowed to see either vendors' battery state, nor battery model. So the question may appear for example, what if battery models are defective/wrong and lead to poor power management decisions and trucks of the fleet may get stuck somewhere with an empty battery? In all these examples, algorithms and/or models could be protected, i.e., kept confidential in addition to the data, meaning that multiple parties can rely on confidentiality guarantees while still being interested in the potential to have additional traceability and root cause analysis in case of deviations from expected behavior.

Furthermore, according to several examples of the present disclosure, the present disclosure builds on the idea of embedding predetermined threshold values or "traps" (traps as used further below) into the algorithm or platform running models, such as AI/ML, mathematical, or physical models. The algorithm, platform, or model itself is designed to provide additional insights into the data in case a trap hits, for example, in case some KPI is outside of predefined boundaries. The additional insights may need to be fine-grained enough to be able to take further actions in the sense of steering a technical process back toward normal behavior. However, they need to be protective enough not to leak the original data, which may need to remain confidential in any case.

While the approach of traps may allow partial root cause analysis or action recommendation a-posteriori, i.e., after a deviation happened, these might be combined with additional a-priori methods ensuring a higher level of trust into the information, such as zero-knowledge proof or remote attestation methods verifying that the model of sub-suppliers or partners used is valid without the sub-supplier or partner having to reveal the model itself.

According to several examples of the present disclosure, an example for a trap or a predetermined KPI threshold value could be that the CO2 emission KPI in a sustainability dashboard of a production process is too high. This trap could be triggered in two ways: first, using an a priori method or, second, using an a posteriori method. In case of an a priori method, for example, with zero-knowledge proofs any sensors of the platform using invalid models or that need to be recalibrated or calibrated may get flagged. Similarly, remote attestation could be used to verify the origin of data, the integrity of assets and the platform processing the data.

In case of an a posteriori method, a trap may fire or become active, triggering the algorithm (or a calculation module in general) to provide insights into directions to further investigate. There are various examples for such traps. Some of them are listed and briefly explained in the following as an example only without being limited thereto.

According to several examples of the present disclosure, depending on the calculation module's, the algorithm's or data's individual protection needs and characteristics, selected traps might be applied. Which of the traps will be applied may be subject to pre-configuration of the confidentiality-protected execution environments, such as trusted execution environments or encryption for example. The pre-configuration may comprise both, the boundaries for a trap to fire, as well as the aggregated data that is allowed to be revealed in case the trap fires.

Examples for "trap boundaries" or predetermined thresholds are the following:
- A specific value, for example, CO2 emission KPI in a sustainability dashboard of a product process, may statistically deviate from previous values by a certain amount, for example 10% from average of the last 24 hours.
- A specific value may be higher or lower than predefined boundary values or (upper/lower) thresholds, for example, a boiler temperature increases above 80°C or decreases below 30°C.
- Time-series data analysis to detect outliers. For example, missing data or too frequent data may indicate an issue with a broken sensor or actor (of the platform for example).
- Anomaly detection, where correlations between multiple values (multiple values of a same KPI or different KPIs for example) may indicate an issue. For example, normally temperate and pressure values both increase and decrease together. A trap may fire when the temperature increases while the pressure decreases, and vice versa.

Examples for "trap actions" or for processes that are triggered due to a predetermined threshold being violated are the following:
- Revealing a process stage that contributed most to firing of the trap, such as a process stage having consumed most CO2 within the last hour, for example, in case CO2 emission tracking fires the trap.
- Revealing a process lifecycle phase that contributed most to firing of the trap, such as the lifecycle phase having failed the most in terms of sustainability KPIs.
- Revealing the, for example three, most non-sustainable process parts or products that contributed most to firing of the trap within a production process.
- Revealing the top, for example ten, (aggregated) data points with highest deviation from average of, for example, last week's monitoring in case of an alarm.
- Revealing the identities of those devices that were related to a raised alarm and that have had the highest spread in measured data.
- Revealing battery state of battery model points at discrete points in time after a battery-related issue occurred, in order to allow a rough double-checking of these values against expected data, for instance, in case of energy management for mobile mining equipment.
- Revealing the, for example five, most influential layers of a ML model in case of an issue, having for instance predicted energy management for the last charging decisions.

Such "trap actions" may allow some first insights into the deviations of a normal "blackbox" monitoring, enabling to take further actions depending on the granularity of information released by the trap.

Instead of providing further data insights, an a-posteriori trap could also provide action recommendations based on a confidential ML model. This means, the confidential ML model would not reveal any of the confidential data while allowing to take action based on previously learned corrective actions in cases of similar deviations.

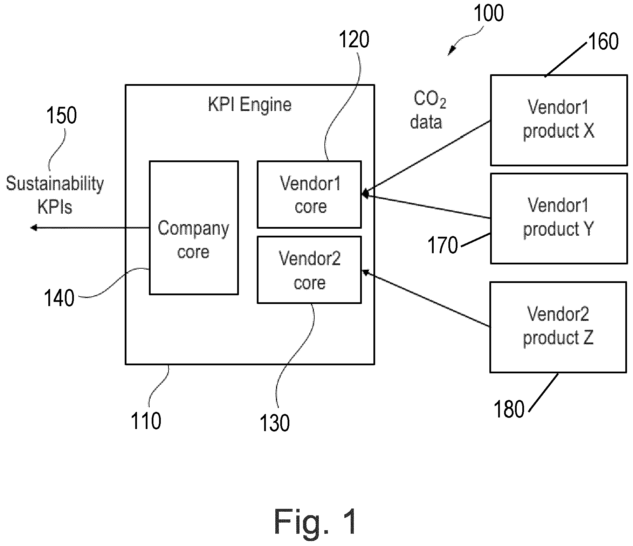

Referring now to Figure 1, Figure 1 schematically shows an architectural drawing or system 100, which comprises a KPI Engine 110. The KPI Engine 110 comprises a Vendor1 core 120, a Vendor2 core 130 and a Company core 140. The KPI Engine 110 may comprise more or less Vendor cores. For example, Vendor1 core 120 may comprise company data or first company data associated with a first company (first vendor). The first company data may be secured by first IT security means. The Company core 140 may comprise an application or calculation module provided by a second company representing for example an application provider or calculation module provider. The calculation module may be secured by second IT security means. The calculation module from the Company core 140 may obtain, for example access, at least part of the first company data for processing the at least part of the first company data. Sustainability KPIs 150 may be output by the calculation module and the KPI Engine 110 as a result from the processing.

The first company data may be provided by the first company that may represent a first data provider. For example, as indicated in Figure 1, the first company (the first vendor) may input CO2 data for a product X 160 into the Vendore1 core 120 and may input CO2 data for a product Y 170 into the Vendore1 core 120. Thus, the first company data may comprise the CO2 data for the product X 160 and the CO2 data for the product Y 170. The calculation module may thus calculate KPIs for CO2 emissions for the product X and for the product Y, for example across several processing steps along the products' production processes or along the products' supply chains.

The KPI Engine 110 may represent a platform or may be provided at a platform. The KPI Engine 110 may be provided by a third company that may represent a platform provider. The KPI engine 110 may feed the KPIs 150 into a customer dashboard.

Vendor2 core 130 may comprise second company data associated with a fourth company, i.e. a second vendor. The second company data may be secured by same or different IT security means as the first IT security means.

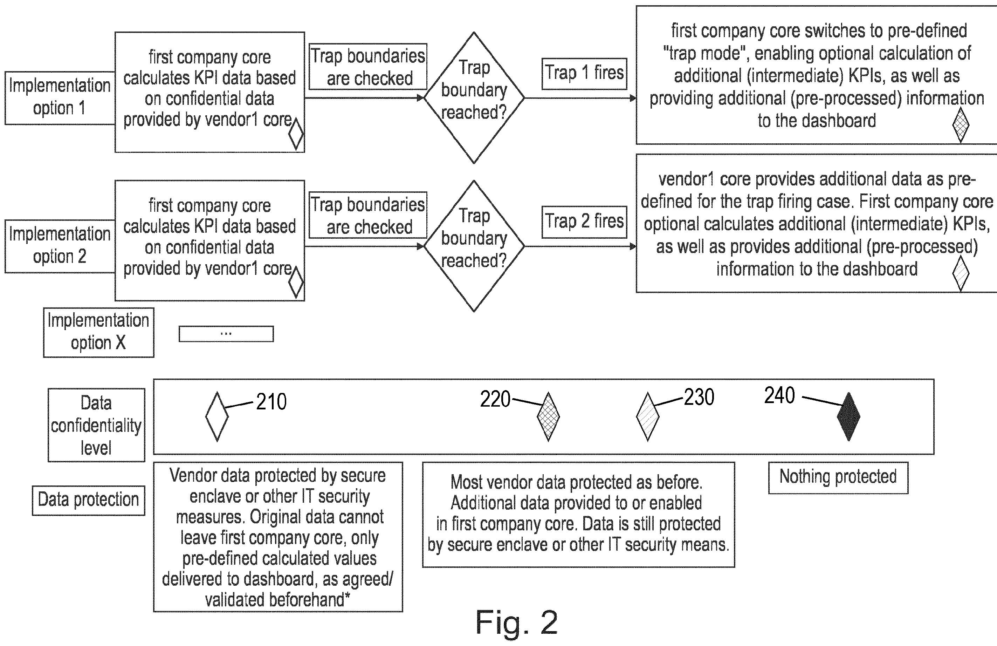

Referring now to Figure 2, Figure 2 illustrates a schematic drawing showing a sequence of events that may happen in case of a deviation for calculated KPI values, such as an issue or alarm raised for a monitored KPI, or a deviation from a predefined trap boundary or reference KPI value for example. The process, i.e. a processing of the data provided by the data providers (for example the data 160 and 170 provided by the first company as illustrated according to Figure 1 or the data 180 provided by the fourth company as illustrated according to Figure 1) by use of the application or calculation module (for example as provided by the second company in the Company core 140 as illustrated according to Figure 1), may run in normal mode with full data protection. The normal mode may also be understood as an initial mode or a first state. In Figure 2, different data confidentiality levels are indicated by different rhombuses, wherein an unpatterned rhombus 210 represents full data protection, a tiled rhombus 220 represents less data protection as compared with the unpatterned rhombus 210, a striped rhombus 230 represents less data protection as compared with the tiled rhombus 220, and a black rhombus 240 represents no data protection. In normal mode, KPI data for example may be calculated with full or highest data protection based on confidential data provided by the different companies or vendors. During normal mode predefined threshold values, trap boundaries or trigger criteria are continuously checked, and in case a threshold value is violated, a trap boundary is reached or a trigger criterion is satisfied (e.g., an alarm is issued, or a deviation for a determined value from an average value comprising a predetermined amount of directly preceding values has reached 10% or more), the respective trap fires or is activated. Then, additional data is accessible by the calculation module, for example, either as the Vendor1 core 120 or the Vendor2 core 130 as illustrated in Figure 1, provides additional data or as the calculation module in the Company core 140 switches to a trap mode, which may represent a second mode or second state (i.e. the calculation module may switch from a first state into a second state for example, wherein the first state may be understood as an initial mode or normal mode and wherein the second state may be understood as the trap mode or as a mode for more detailed data processing by using data on a less aggregated level/by using data with increased data exposure level) for using additional data. In this case, as indicated in Figure 2 by rhombuses 220 and 230, most vendor data including all original data is still protected, while data exposure level to the calculation module slightly increases due to the access to additional data. Depending on the specific trap, data exposure level to the calculation module might differ, i.e., more or less additional data might be provided to Company core 140.

Hence, according to several examples of the present disclosure, an amount and/or a granularity and/or a data exposure level of the additional data is based on the trap (the trap's configuration) or trigger module (trigger module's configuration). It shall be noted that still all data (i.e. original data plus additional data) is protected, and there is no situation that leads to a situation that all data is exposed or data protection for confidentiality is not given.

According to several examples of the present disclosure, based on particular needs of the calculation module (e.g., data owner and vendor relationship) the traps which may be implemented or embedded in the calculation module and/or the KPI Engine 110 for the particular use-cases may need to be defined in-advance and agreed between the parties (i.e. the first and second companies for example). The definition of "traps" can be expressed either in natural language or using some machine-readable constraints to simplify the logic following the trap firing. Furthermore, trap actions may need to be aligned in advance in a technical and possibly also legal "contract", for example, deciphering parts of data of the data provider (data owner) in an automatic or semiautomatic (e.g., with a human-approvement) step.

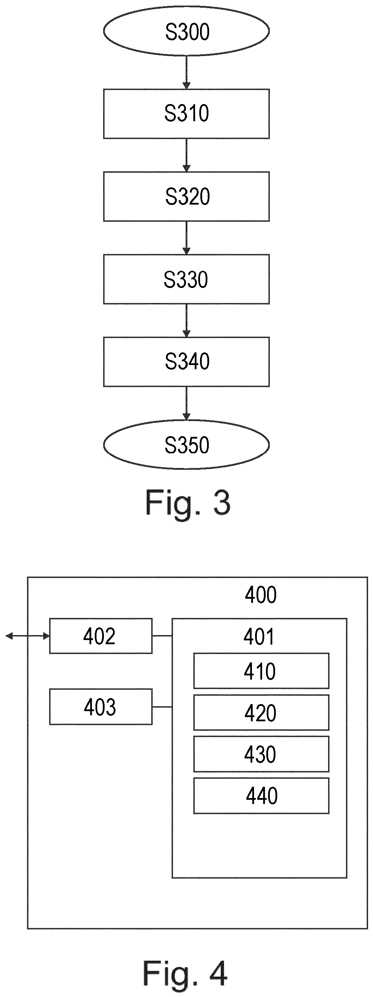

Referring now to Figure 3, Figure 3 illustrates a flowchart indicative of a method according to several examples of the present disclosure. The method is for providing insights into confidential company data in case of data deviations in an industrial plant context.

The method starts in S300.

In S310, the method comprises processing company data by a calculation module in a first processing state and, in S320, obtaining KPI values from the processing. The company data are secured by first IT security means and are associated with a process related to a first company. The calculation module is secured by second IT security means and is associated with a second company. The company data, first and second IT security means and first and second companies may be such company data, first and second IT security means and first and second companies as outlined above with reference to Figures 1 and 2.

In S330, the method comprises determining data deviations by determining whether a predetermined KPI threshold is violated by the obtained KPI values, i.e. whether a predetermined trap is hit. The determining may comprise such checking for trap boundaries as illustrated in Figure 2.

In S340, the method comprises, based on a result of the determining, using an a posteriori method comprising providing action recommendations for data deviation reduction based on a confidential machine learning model and/or switching the calculation module into a second processing state, wherein the second processing state enables the calculation module to perform additional processing related to the company data and to provide additional information related to the company data as compared with the first processing state; and/or using an a priori method comprising applying a zero-knowledge proof method and/or a remote attestation method related to the company data. The using of the methods may comprise such switching and additional data obtainment as illustrated in Figure 2.

The method ends in S350.

Referring now to Figure 4, Figure 4 shows a block diagram schematically illustrating a data processing apparatus 400 according to several examples of the present disclosure. In particular, according to several examples of the present disclosure, there is provided a data processing apparatus 400 for providing insights into confidential company data in case of data deviations in an industrial plant context. The data processing apparatus 400 comprises a processor 401 being configured to carry out the method as derivable from Figure 2 and/or the method of Figure 3. The data processing apparatus 400 may function as such calculation module as outlined above with reference to Figures 1 to 3.

In more detail, according to various examples, a data processing apparatus 400 being configured to carry out the method of Figure 3 may comprise a processing circuitry, a processing function, a processing means, a processing unit or a processor 401, which enables the data processing apparatus 400 to participate in providing insights into confidential company data in case of data deviations in an industrial plant context. The processor 401 may comprise one or more processing portions or functions, wherein the processing portions or functions may be provided as one or more physical or virtual entities. The data processing apparatus 400 may comprise one or more communication interfaces 402. The data processing apparatus 400 may further comprise a memory or memory unit 403 for storing data, programs and/or instructions to be executed by the processor. The memory 403 may be a memory internal to the data processing apparatus 400 or may be a memory external to the data processing apparatus 400, for example at a cloud server. The processor 401 may comprise one or more portions, which enable the data processing apparatus 400 to execute the method of Figure 3 for example. According to several examples of the present disclosure, a processing portion 410 may be configured to perform such processing according to S310 of Figure 3. Further, an obtaining portion 420 may be configured to perform such obtaining according to S320 of Figure 3. Moreover, a determining portion 430 may be configured to perform such determining according to S330 of Figure 3. A using portion 440 may be configured to perform such using according to S340 of Figure 3.

According to several examples of the present disclosure, the respective portions of the data processing apparatus 400 may also be understood as means for carrying out the certain function.

According to several examples of the present disclosure, there is provided a data processing system for providing insights into confidential company data in case of data deviations in an industrial plant context. The data processing system comprises the data processing apparatus 400 according to Figure 4 and/or comprises means for carrying out the method as derivable according to Figure 2 and/or the method according to Figure 3. The data processing system may be such system 100 as illustrated according to Figure 1.

According to several examples of the present disclosure, there is provided an industrial plant comprising the data processing apparatus 400 according to Figure 4 and/or the data processing system as outlined above.

According to several examples of the present disclosure, there is provided a computer-readable medium comprising instructions which, when executed by a computing system, causes the computing system to perform the method as derivable from Figure 2 or the method according to Figure 3. The computer-readable medium may be transitory or non-transitory, volatile or non-volatile.

According to several examples of the present disclosure, there is provided a computer program product comprising instructions which, when executed by a computing system, enable or cause the computing system to perform the method as derivable from Figure 2 or the method according to Figure 3. The computer program product may comprise a computer-readable medium comprising instructions of the computer program product. The computer-readable medium as mentioned above may have stored thereon the computer program product.

According to several examples of the present disclosure, there is provided a use of the data processing apparatus 400, the data processing system as outlined above, the industrial plant as outlined above, the computer-readable medium as outlined above and/or the computer program product as outlined above.

The method according to Figure 3 may be at least in parts computer implemented. According to several examples of the present disclosure, preferably the method according to Figure 3 is computer implemented.

Optional features of the method according to Figure 3 may form part of the data processing apparatus 400, the data processing system, the industrial plant, the computer-readable medium, the computer program product, and the use, mutatis mutandis.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A method for providing insights into confidential company data in case of data deviations in an industrial plant context, the method comprising:
processing (S310) company data by a calculation module in a first processing state and obtaining (S320) key performance indicator, KPI, values from the processing,
wherein the company data are secured by first IT security means and are associated with a process related to a first company,
wherein the calculation module is secured by second IT security means and is associated with a second company;
determining (S330) data deviations by determining whether a predetermined KPI threshold is violated by the obtained KPI values; and
based on a result of the determining,
using (S340) an a posteriori method comprising providing action recommendations for data deviation reduction based on a confidential machine learning model and/or switching the calculation module into a second processing state, wherein the second processing state enables the calculation module to perform additional processing related to the company data and to provide additional information related to the company data as compared with the first processing state; and/or
using (S340) an a priori method comprising applying a zero-knowledge proof method and/or a remote attestation method related to the company data.

2. The method according to claim 1, further comprising
embedding one or more predetermined KPI thresholds into the calculation module; and
determining whether the predetermined KPI threshold is violated based on determining whether an embedded predetermined KPI threshold is violated.

3. The method according to claim 1 or 2, further comprising if it is determined that the predetermined KPI threshold is violated, triggering the calculation module to perform the switching and/or the applying.

4. The method according to any of claims 1 to 3, wherein the switching the calculation module into the second processing state comprises
making additional company data accessible for the calculation module, wherein the additional company data are associated with the process related to the first company; and
processing the additional company data by the calculation module.

5. The method according to claim 4, wherein at least part of the additional company data is included in the company data and the making the additional company data accessible for the calculation module comprises
transferring the at least part of the additional company data to the calculation module, and/or
enabling the calculation module to access the at least part of the additional company data included in the company data.

6. The method according to claim 4 or 5, wherein at least part of the additional company data is not included in the company data and is secured by third IT security means, and the making the additional company data accessible for the calculation module comprises
transferring the at least part of the additional company data to the calculation module, and/or
enabling the calculation module to access the at least part of the additional company data secured by the third IT security means.

7. The method according to any of claims 1 to 6, wherein the switching of the calculation module into the second processing state comprises
enabling the calculation module to perform additional calculation methods; and
processing the company data and/or the additional company data by using one or more of the additional calculation methods.

8. The method according to claim 7, wherein the enabling of the calculation module to perform the additional calculation methods comprises enabling the calculation module to process the company data and/or the additional company data, and to obtain values for additional KPIs from the processing.

9. The method according to any of claims 1 to 8,
wherein at least two IT security means of the first IT security means, the second IT security means and the third IT security means are different from each other, or
wherein the first IT security means, the second IT security means and the third IT security means are the same IT security means.

10. The method according to any of claims 1 to 9, wherein to be secured by at least one of the first IT security means, the second IT security means and the third IT security means comprises at least one of:
providing the calculation module, the company data and/or the additional company data in a trusted execution environment, TEE,
encrypting the company data and/or the additional company data,
protecting the company data and/or the additional company data using distributed ledger technology,
using homomorphic encryption to perform computations on encrypted company data and/or additional company data without decrypting it,
proving the state of the company data and/or the additional company data by means of zero-knowledge proofs,
anonymizing the company data and/or the additional company data,
obfuscating the company data and/or the additional company data,
authenticating the company data and/or the additional company data,
enforcing access control on the company data and/or the additional company data via attribute-based, role-based, and/or context-based authorization

11. The method according to any of claims 1 to 10,
wherein one or more predetermined a posteriori methods are associated with respective one or more predetermined KPI thresholds, and wherein the method further comprises using one or more predetermined a posteriori methods based on determined corresponding one or more predetermined KPI thresholds; and/or
wherein one or more predetermined a priori methods are associated with respective one or more predetermined KPI thresholds, and wherein the method further comprises using one or more predetermined a priori methods based on determined corresponding one or more predetermined KPI thresholds.

12. The method according to any of claims 1 to 11, further comprising
providing the calculation module on a platform; and
receiving the company data and/or the additional company data at the platform.

13. A data processing apparatus for providing insights into confidential company data in case of data deviations in an industrial plant context, the data processing apparatus comprising a processor being configured to carry out the method of any of claims 1 to 12.

14. A computer program product comprising instructions which, when executed by a computing system, enable and/or cause the computing system to perform the method of any of claims 1 to 12.

15. A computer-readable medium having stored thereon the computer program product according to claim 14.
